# EUROPÄISCHE PATENTSCHRIFT

(11) **EP 0 637 987 B1**
(45) Veröffentlichungstag und Bekanntmachung des Hinweises auf die Patenterteilung: **14.01.1998**
(21) Anmeldenummer: 93909352.2
(22) Anmeldetag: 27.04.1993
(51) Int. Cl.: B01D 53/22

(54) **VERFAHREN UND VORRICHTUNG ZUR TRENNUNG VON ÜBER FLÜSSIGKEITEN ENTSTEHENDEN GASGEMISCHEN**
PROCESS AND DEVICE FOR SEPARATING GAS MIXTURES FORMED ABOVE LIQUIDS
PROCEDE ET DISPOSITIF PERMETTANT DE SEPARER DES MELANGES GAZEUX SE FORMANT AU-DESSUS DE LIQUIDES

(30) Priorität: 27.04.1992 DE 4214551
(43) Veröffentlichungstag der Anmeldung: 15.02.1995
(73) Patentinhaber: GKSS-FORSCHUNGSZENTRUM GEESTHACHT GMBH, D-21502 Geesthacht (DE); SIHI ANLAGENTECHNIK GmbH, D-25524 Itzehoe (DE)
(72) Erfinder: OHLROGGE, Klaus, D-2054 Geesthacht (DE); WIND, Jan, D-2000 Barsbüttel (DE); BURMEISTER, Michael, D-2058 Lauenburg (DE)
(74) Vertreter: Niedmers, Ole, Dipl.-Phys.
(86) Internationale Anmeldenummer: DE9300367
(87) Internationale Veröffentlichungsnummer: WO9322031

(56) Entgegenhaltungen:
- EP-A- 0 329 962
- EP-A- 0 359 149
- DE-A- 3 824 400
- DE-A- 3 940 855
- US-A- 5 062 273

## Beschreibung

Die Erfindung betrifft ein Verfahren Zur Trennung von über Flüssigkeiten entstehenden Gasgemischen, insbesondere Kohlenwasserstoff-Gasgemischen, unter Verwendung einer eine Gastrennmembran aufweisenden Trenneinrichtung, auf deren Retentatseite ein um eine oder mehrere Komponenten abgereichertes Gemisch (Retentat) und auf deren Permeatseite ein um eine oder mehrere Komponenten angereichertes Gemisch (Permeat) erzeugbar ist, sowie eine Vorrichtung zur Ausführung dieses Verfahrens.

Es ist bekannt, daß beispielsweise bei der Befüllung von Behältern mit Flüssigkeiten unmittelbar am Befüllort Gase bzw. Gasgmische aus den Bestandteilen der Flüssigkeiten entstehen. Dieses aufgrund naturgesetzlicher Vorgänge entstehende Gas bzw. Gasgemisch wird bisher in den allermeister Fällen an die Umgebung in unkontrollierter Weise abgegeben, beispielsweise beim Betanken von Kraftfahrzeugen an Tankstellen unmittelbar an die Luft. Die unkontrollierte Abgabe von Gas bzw. Gasgemischen bei derartigen Umfüllungs- bzw. Befüllvorgängen hat zwei erhebliche Nachteile. Zum einen wird eine erhebliche Menge der Flüssigkeit in gasförmiger Form an die Umgebung abgegeben, was zu einem erheblichen wirtschaftlichen Nachteil führt, zum anderen wird sowohl die Umwelt als auch die den Umfüll- bzw. Befüllvorgang durchführender Person dabei mit erheblichen Mengen gesundheitsschädlicher Gase beaufschlagt.

Zur Behebung dieser erheblichen Nachteile ist unter anderem aufgrund gesetzlicher Auflagen geplant worden, beispielsweise für die Befüllung von Tanks von Kraftfahrzeugen die sogenannte Zapfpistole, aus der der Kraftstoff in den Tank des Kraftfahrzeugs austritt, mit einer Dichtungsmanschette auszurüsten, die den Tankstutzen und Teile der Zapfpistole umschließt, wobei der Übergang des Tankeinfüllstutzen zum Zapfventil dabei gegen die Umgebung abgedichtet ist. Über diese Dichtungsmanschette werden die beim Betankungsvorgang entstehenden Gase gegen die Umgebung abgekapselt und in den Tank zurückgeführt. Auf diese Weise soll sichergestellt werden, daß beim Befüllen des Tanks eines Kraftfahrzeugs, was gleichermaßen aber auch grundsätzlich auf gleiche Weise für andere zu befüllende Behälter gilt, die beim Befüllen bzw. Umfüllen entstehenden Gase bzw. Gasgemische nicht aus dem Tank austreten zu lassen, vielmehr in einem geschlossenen System rezykliert werden. Dabei sorgt ein in der normalerweise bei jedem Flüssigkeitstank vorgesehenen Tankentlüftung vorgesehenes Filter, beispielsweise ein Kohlefilter, das auch zur Reduzierung der Atmungsverlust eines derartigen Tanks vorgesehen ist, für die Adsorption der Gase, die innerhalb des Tanks bzw. Behälters bei einem Kraftfahrzeug normalerweise entstehen. Ziel ist es, das verdrängte Gasvolumen aus einem Betriebflüssigkeitstank, in einen Lagertank, aus dem Flüssigkeit entnommen wird, wieder zurückzuführen. Man spricht in diesem Zusammenhang auch von einer sogenannten Gaspendelung. Die Gaspendelung ist in verschiedenen Ländern vorgeschrieben und beinhaltet die Installation eines kleinen Kohlekanisters im Kraftfahrzeug zur Reduzierung der Atmungsverluste sowie die Gaspendelung an Tankstellen.

Es ist Aufgabe der vorliegenden Erfindung ein Verfahren und eine Vorrichtung der eingangs genannten Art zu schaffen, mit denen die letztgenannten Systeme dahin verbessert werden, daß eine noch effektivere Rückführung des Gases bzw. Gasgemisches in den Flüssigkeitsbehälter möglich ist, wobei das Verfahren mit einfachen Mitteln durchgeführt werden kann und eine Vorrichtung zur Ausführung des Verfahrens kostengünstig und im wesentliche wartungsfrei bereitstellbar ist, so daß das Verfahren und/oder die Vorrichtung massenhaft, beispielsweise an jeder beliebigen Zapfsäule oder als zentrale Einheit einer Tankstelle für Kraftfahrzeuge und dergleichen, eingesetzt werden können und dabei die Umweltbelastung und die gesundheitsbedenkliche Belastung der den Umfüllvorgang ausführenden Person bis in umwelt- und gesundheitsunbedenkliche Bereiche reduziert wird.

Gelöst wird die Aufgabe gemäß dem erfindungsgemäßen Verfahren dadurch, daß die Volumenmenge pro Zeit des zur Trenneinrichtung durch retentat- und permeatseitigen Unterdruck zugeführten zu trennenden Gasgemisches, welches bei einem Umfüllvorgang der Flüssigkeit bei deren Kontakt mit dem Umgebungsgas entsteht, > die beim Umfüllvorgang umgefüllte Volumenmenge pro Zeit der Flüssigkeit ist und die Volumenmenge pro Zeit des erzeugten Permeats ≤ der beim Umfüllvorgang umgefüllten Volumenmenge pro Zeit der Flüssigkeit ist, wobei die Volumenmengen auf den Normzustand bezogen sind.

Auf diese Weise wird vorteilhaft sichergestellt, daß die sich oberhalb des Flüssigkeitsspiegels eines Behälters oder Tanks, in dem beispielsweise Kraftstoff wie Benzin oder dergleichen gelagert wird, ausbildende stabile Schicht eines Gemisches aus Gas und Luft in einer vorbestimmten, diese Beschichtung nicht störenden Relation gehalten wird, so daß diese Relation erfindungsgemäß nicht gestört ist und somit die derart betriebenen Gasrückführsysteme mit Unterdruckunterstützung keinerlei Einschränkungen ihrer Effektivität ausgesetzt sind.

Gemäß einer vorteilhaften Ausgestaltung des Verfahrens liegt das Verhältnis der Volumina aus dem zurückgeführten Gasgemisch und der umgefüllten Flüssigkeit im Bereich von 1 : 1,05.

Um auf einfache Weise einen für die Absaugung des Gasgemisches unmittelbar am Ort der Umfüllung bzw. Befüllung eines Behälters mit Flüssigkeit und zudem auch auf gezielt einstellbare Weise zu ermöglichen, ist vorteilhafterweise das Permeat gegenüber dem zu trennenden Gasgemisch druckerniedrigt, wobei vorteilhafterweise auch dazu das Retentat gegenüber dem zu trennenden Gasgemischdruck druckerniedrigt sein kann. Somit wird auf gezielte Weise das Druckinventar für die Trennung des Gasgemisches in der eine Gastrennmembran aufweisenden Trenneinrichtung genutzt, um im Bereich des Umfüllortes einen solchen Unterdruck zu erzeugen, daß die mit Gasen bzw. Gasgemischen belastete Umgebung des Einfüllstutzens eines Behälters bzw. Tanks vollständig abgesaugt wird.

Vorzugsweise wird das Retentat erneut einem Flüssigkeitsvorrat zugeführt, dem die Flüssigkeit für den Umfüllvorgang entzogen worden war, beispielsweise einem Erdtank, einer Tankstelle und dergleichen.

Das Retentat, das nur noch schwach mit dem zu trennenden Gas belastet ist, wird vorteilhafterweise an die Umgebung abgegeben. Es kann aber auch sinnvoll sein, das Retentat nicht direkt an die Umgebung abzugeben, sondern wenigstens teilweise in den Entlüftungsraum eines Flüssigkeitsbehälters zu leiten, so daß beispielsweise ein Unterschuß im Gasvolumen des Flüssigkeitsbehälters durch diese Maßnahme ausgeglichen werden kann.

Schließlich ist es von Vorteil, den Saugdruck des zu trennenden Gasgemisches vor Eintritt in die Trenneinrichtung auf eine vorbestimmten Wert einzustellen.

Bei der Vorrichtung zur Ausführung des Verfahrens wird die erfindungsgemäße Aufgabe dadurch gelöst, daß an der Trenneinrichtung sowohl retentatseitig als auch permeatseitig jeweils eine Pumpeneinrichtung zur Erzeugung eines Unterdrucks angeordnet sind, die derart einstellbar sind, daß die Volumenmenge pro Zeit des zur Trenneinrichtung zugeführten, zu trennenden Gasgemisches, welches bei einem Umfüllvorgang der Flüssigkeit bei deren Kontakt mit dem Umgebungsgas entsteht, größer der beim Umfüllvorgang umgefüllten Volumenmenge pro Zeit der Flüssigkeit ist und die Volumenmenge pro Zeit des erzeugten Permeats gleich oder kleiner der beim Umfüllvorgang umgefüllten Volumenmenge pro Zeit der Flüssigkeit ist.

Der Vorteil der erfindungsgemäßen Vorrichtung besteht im wesentlichen darin, daß die retentatseitig und auch permeatseitig vorgesehenen Pumpeneinrichtungen in ihren Betriebscharakteristiken derart angeglichen werden können, daß sie im Bereich von ihrer Minimallast bis zum Erreichen der Vollast stets das gleiche Trennergebnis der mit einer Gastrennmembran ausgerüsteten Trenneinrichtung sicherstellen können, wobei auf einfache Weise fortlaufend die Volumenmengenpro Zeit Relation eingehalten werden kann, so daß das zulässige Verhältnis Gas bzw. Gasgemisch zu Volumenmenge der Flüssigkeit, die umgefüllt wurde, im Behälter bzw. Tank nicht überschritten wird. Somit wird auf einfache Weise sichergestellt, daß eine stabile Schichtung des Gases bzw. Gasgemisches oberhalb des Flüssigkeitsspiegels im Behälter bzw. Tank nicht gestört wird.

Grundsätzlich kann durch geeignete Auswahl der Pumpeneinrichtung die Volumenmengen pro Zeit Relation fortwährend zwischen Minimallast und Maximallast aufrechterhalten werden. Vorteilhaft weil einfach zu beeinflussen ist es, in einer Förderleitung des Gasgemisches vom Umfüllort zur Trenneinrichtung ein Regelventil anzuordnen, mit dem das Verhältnis des vom Umfüllort abzusaugenden Gasgemisches im Verhältnis zum geförderten Flüssigkeitsvolumen ebenfalls, ggf. einfacher als über die Steuerung der Pumpeneinrichtungen einstellbar ist.

Die Pumpeneinrichtung für das Permeat ist vorzugsweise auslaßseitig mit einem Flüssigkeitsbehälter verbunden, in den das gewonnene Permeat zurückgefördert wird, während vorteilhafterweise das die Pumpeneinrichtung verlassende Retentat an die Umgebung abgebbar ist. Das Druckinventar der Pumpeneinrichtungen, die Vakuumpumpen sind, ist pumpenauslaßseitig dabei so groß, daß keine zusätzlichen Pumpenmittel erforderlich sind, um die vorbeschriebene Förderung sowohl des Retentas als auch des Permeats an die Umgebung bzw. in einen Flüssigkeitsbehälter zu bewirken.

Auch kann es vorteilhaft sein, daß die Pumpeneinrichtung für das Retentat mit dem Entlüftungsraum des Flüssigkeitsbehälters verbunden ist, so daß beispielsweise ein Unterschuß an Gas- bzw. Gasgemischvolumen im Flüssigkeitsbehälter durch das von der Trenneinrichtung kommende Retentat ausgeglichen werden kann.

Schließlich wird bei einer weiteren vorteilhaften Ausgestaltung der Vorrichtung der Saugdruck des zur Trenneinrichtung geführten zu trennenden Gasgemisches über ein Regelventil einstellbar ausgebildet.

Die Erfindung wird nun unter Bezugnahme auf die nachfolgende einzige schematische Zeichnung anhand eines Ausführungsbeispieles eingehend beschrieben. Diese zeigt:
in Form einer blockschaltungsartigen Verknüpfung die einzelnen Elemente der Vorrichtung im Zusammenwirken mit einer Zapfstelle zur Betankung eines Kraftfahrzeugs mit flüssigem Kraftstoff und dem Zusammenwirken der Vorrichtung mit einem Flüssigkeitsbehälter, aus dem der Kraftstoff gefördert wird.

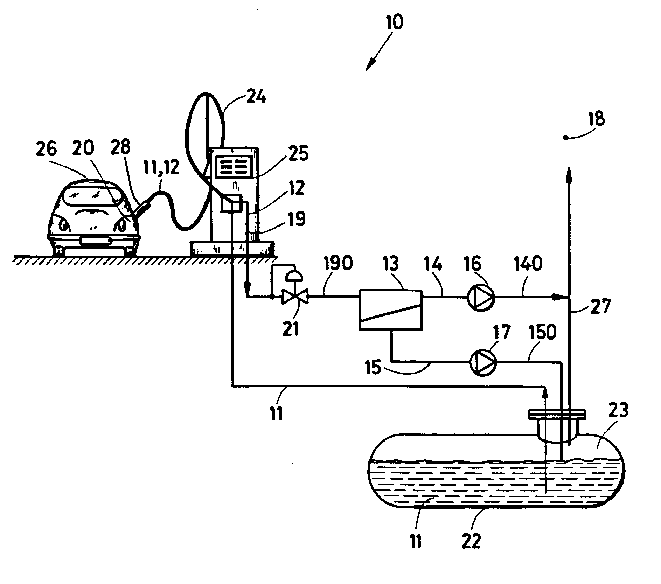

Die in der einzigen Figur dargestellte Vorrichtung 10 umfaßt im wesentlichen eine mit einer Gastrennmembran versehene Trenneinrichtung 13, die die Trennung eines Gasgemisches 12 auf grundsätzlich bekannte Weise in ein Retentat 14 und ein Permeat 15, beispielsweise mittels Gaspermeation, ausführt. Da diese Trennverfahren, mit der derartige Trenneinrichtungen 13 arbeiten, an sich bekannt sind, wird hier darauf nicht weiter eingegangen. Eingangsseitig ist die Trenneinrichtung 13 über eine Förderleitung 19 mit dem Förderschlauch 24 einer Zapfstelle für eine Flüssigkeit 11 verbunden, wobei die Flüssigkeit 11 aus einem Flüssigkeitsbehälter 22 über eine geeignete Verbindungsleitung zu einer Zapfstelle 25 mittels hier nicht gesondert dargestellter Pumpeneinrichtungen zur Förderung der Flüssigkeit 11 gefördert wird. Der Schlauch 24 ist ein sogenannter Koaxialschlauch, durch den sowohl die Förderung des zu trennenden Gasgemisches 12 als auch der Flüssigkeit 11 zur Betankung eines Tanks eines Kraftfahrzeugs 26 möglich ist, vergleiche die einzige Figur.

In die Förderleitung 19 des Gasgemisches 12 von einem Umfüllort 20 zur Trenneinrichtung 13 ist ein als Regelventil ausgebildetes Ventil 21 angeordnet, auf das im einzelnen weiter unter eingegangen wird. Der Trenneinrichtung 13 nachfolgend sind sowohl retentatseitig 14 als auch permeatseitig 15 jeweils Pumpeneinrichtungen 16, 17, die in Form von Vakuumpumpen ausgebildet sind, zur Erzeugung eines Unterdrucks an der Retentat- bzw. Permeatseite der Trenneinrichtung 13 angeordnet. Die Pumpeneinrichtung 17 für das Permeat 15 ist auslaßseitig mit dem Flüssigkeitsbehälter 22 verbunden, während das die Pumpeneinrichtung 16 verlassende Retentat 14 wahlweise an eine Entlüftungsleitung 27 angeschlossen ist, die normalerweise bei allen Flüssigkeitsbehältern 22 den dortigen Entlüftungsraum 23 mit der Umgebung bzw. dem Umgebungsgas Luft 18 verbindet.

Bei der Ausführung ihres erfindungsgemäßen Betriebes arbeitet die Vorrichtung 10 gemäß folgendem Verfahren:

Zunächst wird die am freien Ende des Förderschlauches 24 angeordnete Zapfpistole 28 in den hier nicht gesondert dargestellten Tankstutzen eines Tanks eines Kraftfahrzeugs 26 gesteckt. Die Zapfpistole 28 weist unmittelbar im Bereich ihrer Austrittsöffnung für die Flüssigkeit 11 hier nicht gesondert dargestellte Absaugdüsen bzw. Absaugöffnungen auf, die dafür sorgen, daß das beim Umfüllvorgang der Flüssigkeit 11 bei deren Kontakt mit dem Umgebungsgas 18, hier Umgebungsluft, entstehende Gasgemisch 12 abgesaugt wird. Durch den in Form eines Koaxialschlauches ausgebildeten Förderschlauch 24 wird somit während der Förderung der Flüssigkeit 11 nach Betätigung des Zapfventiles der Zapfpistole 28 das Gasgemisch über das Regelventil 21 zur Trenneinrichtung 13 geführt, und zwar mit Hilfe der beiden Pumpeneinrichtungen 16 und 17. Die beiden Pumpeneinrichtungen 16, 17 bilden für die bestimmungsgemäße Funktion der Vorrichtung 10 ein derart großes Druckinventar, daß keine zusätzlichen Maßnahmen zur ausreichenden Förderung des Gasgemisches 12 zur Trenneinrichtung 13 vorgenommen werden müssen. Um unmittelbar am Umfüllort 20, d.h. im Bereich des Überganges der Flüssigkeit 11 in den Stutzen des Tanks eines Kraftfahrzeugs 26, fortwährend einen im wesentlichen konstanten Unterdruck aufrechterhalten zu können, ist das Regelventil 21 vorgesehen, d.h. über dieses wird für die Aufrechterhaltung eines konstanten Absaugdrucks gesorgt.

Durch eine geeignet gewählte Förderleistung der Pumpeneinrichtungen 16, 17 in Verbindung mit dem Regelventil 21 wird sichergestellt, daß fortwährend die Volumenmenge pro Zeit des zur Trenneinrichtung 13 somit durch permeat- und retentatseitigen Unterdruck zugeführten zu trennenden Gasgemisches, welche bei einem Umfüllvorgang der Flüssigkeit 11 bei deren Kontakt mit dem Umgebungsgas 18 entsteht, größer als die beim Umfüllvorgang umgefüllte Volumenmenge pro Zeit der Flüssigkeit 11 ist, und die Volumenmenge pro Zeit des erzeugten Permeats 15 gleich oder kleiner der beim Umfüllvorgang umgefüllten Volumenmenge pro Zeit der Flüssigkeit 11 ist. Dabei liegt das Verhältnis der Volumina aus zu trennendem Gasgemisch 12 am Eingang und umgefüllter Flüssigkeit 11 im Bereich 1 : 1,05 am Flüssigkeitsbehälter 22.

Das die Trenneinrichtung 13 bestimmungsgemäß verlassende Permeat 15 wird von der Ausgangsseite der Pumpeneinrichtung 17 in den Flüssigkeitstank 22 zurücküberführt. Das die Trenneinrichtung 13 über die Pumpeneinrichtung 16 verlassende Retentat, d.h. im vorliegenden Fall Luft, mit einem nur noch geringen, unbedenklichen Verunreinigungsgrad mit Bestandteilen der Flüssigkeit 11 wird an die Umgebung 18 bzw. das Umgebungsgas Luft abgegeben, oder aber in den Entlüftungsraum 23 des Flüssigkeitsbehälters 22 überführt, um einen Unterschuß an Gasvolumen im Flüssigkeitsbehälter 22 ausgleichen zu können.

Die Gasvolumenmengen sind, wo erforderlich, im Normzustand angegeben, wobei anhand einer Modellrechnung das erfindungsgemäße Verfahren für zwei Betriebszustände dargelegt wird.

| | | Volumenstrom (Betriebs zustand) [m³/h] | Druck [mbar] | Volumenstrom (Normzustand) [m³/h] |
|---|---|---|---|---|
| 11 | Benzin | 1,67 | - | - |
| 19 | Dämpfe/Luft | 2,22 | 900 | 2 |
| 190 | Dämpfe/Luft | 8,62 | 116 | 2 |
| 14 | Retentat | 6,1 | 66 | 0,401 |
| 140 | Retentat | 0,401 | 1013 | 0,401 |
| 15 | Permeat | 100 | 16 | 1,599 |
| 150 | Permeat | 1,599 | 1013 | 1,599 |

| | | Volumenstrom (Betriebs zustand) [m³/h] | Druck [mbar] | Volumenstrom (Normzustand) [m³/h] |
|---|---|---|---|---|
| 11 | Benzin | 8,33 | - | - |
| 19 | Dämpfe/Luft | 11,11 | 900 | 10 |
| 190 | Dämpfe/Luft | 22,62 | 442 | 10 |
| 14 | Retentat | 6,1 | 392 | 2,41 |
| 140 | Retentat | 2,41 | 1013 | 2,41 |
| 15 | Permeat | 100 | 76 | 7,59 |
| 150 | Permeat | 7,59 | 1013 | 7,59 |

Das erfindungsgemäße Verfahren und die erfindungsgemäße Vorrichtung 10 können auch zur Trennung von anderen Gasgemischen beispielsweise Permanentgasgemischen eingesetzt werden, bei denen bei verschiedenen Volumenströmen ein gleichmäßige Auftrennung erfolgen soll.

### Bezugszeichenliste

- 10: Vorrichtung
- 11: Flüssigkeit
- 12: Gasgemisch
- 13: Trenneinrichtung
- 14: Retentat (retentatseitig)
- 140: Retentat
- 15: Permeat (permeatseitig)
- 150: Retentat
- 16: Pumpeneinrichtung
- 17: Pumpeneinrichtung
- 18: Umgebungsgas (Umgebung)
- 19: Förderleitung
- 190: Förderleitung
- 20: Umfüllort
- 21: Regelventil
- 22: Flüssigkeitsbehälter
- 23: Entlüftungsraum
- 24: Förderschlauch
- 25: Zapfstelle
- 26: Kraftfahrzeug
- 27: Entlüftungsleitung
- 28: Zapfpistole

## Patentansprüche

1. Verfahren zur Trennung von über Flüssigkeiten entstehenden Gasgemischen, insbesondere Kohlenwasserstoff-Gasgemischen, unter Verwendung einer eine Gastrennmembran aufweisenden Trenneinrichtung, auf deren Retentatseite ein gasabgereichertes Gemisch (Retentat) und auf deren Permeatseite ein gasangereichertes Gemisch (Permeat) erzeugbar ist, dadurch gekennzeichnet, daß die Volumenmenge pro Zeit des zur Trenneinrichtung durch retentat- und permeatseitigen Unterdruck zugeführten zu trennenden Gasgemisches, welches bei einem Umfüllvorgang der Flüssigkeit bei deren Kontakt mit dem Umgebungsgas entsteht, > der beim Umfüllvorgang umgefüllten Volumenmenge pro Zeit der Flüssigkeit ist und die Volumenmenge pro Zeit des erzeugten Permeats ≤ der beim Umfüllvorgang umgefüllten Volumenmenge pro Zeit der Flüssigkeit ist, wobei die Volumenmengen auf den Normzustand bezogen sind.

2. Verfahren nach Anspruch 1, dadurch gekennzeichnet, daß das Permeat einem Flüssigkeitsvorrat erneut zugeführt wird, dem die Flüssigkeit für den Umfüllvorgang entzogen worden war.

3. Verfahren nach einem oder beiden der Ansprüche 1 oder 2, dadurch gekennzeichnet, daß das Retentat an die Umgebung abgegeben wird.

4. Verfahren nach einem oder mehreren der Ansprüche 1 bis 3, dadurch gekennzeichnet, daß der Saugdruck des zu trennenden Gasgemisches vor Eintritt in die Trenneinrichtung auf einem vorbestimmbaren Wert einstellbar ist.

5. Vorrichtung zur Trennung von über Flüssigkeiten entstehenden Gasgemischen, insbesondere Kohlenwasserstoff-Gasgemischen, unter Verwendung einer eine Gastrennmembran aufweisenden Trenneinrichtung, auf deren Retentatseite ein gasabgereichertes Gemisch (Retentat) und auf deren Permeatseite ein gasangereichertes Gemisch (Permeat) erzeugbar ist, zur Ausführung des Verfahrens nach einem oder mehreren der Ansprüche 1 bis 4, dadurch gekennzeichnet, daß an der Trenneinrichtung (13) sowohl retentatseitig (14) als auch permeatseitig (15) jeweils eine Pumpeneinrichtung (16, 17) zur Erzeugung eines Unterdrucks angeordnet sind, die derart einstellbar sind, daß die Volumenmenge pro Zeit des zur Trenneinrichtung (13) zugeführten, zu trennenden Gasgemisches (12), welches bei einem Umfüllvorgang der Flüssigkeit (11) bei deren Kontakt mit dem Umgebungsgas (18) entsteht, > der beim Umfüllvorgang umgefüllten Volumenmenge pro Zeit der Flüssigkeit (11) ist und die Volumenmenge pro Zeit des erzeugten Permeats (15) ≤ der beim Umfüllvorgang umgefüllten Volumenmenge pro Zeit der Flüssigkeit (11) ist, wobei die Volumenmengen auf den Normzustand bezogen sind.

6. Vorrichtung nach Anspruch 5, dadurch gekennzeichnet, daß in einer Förderleitung (19) des Gasgemisches (12) vom Umfüllort (30) zur Trenneinrichtung (13) ein Regelventil (21) angeordnet ist.

7. Vorrichtung nach einem oder beiden der Ansprüche 5 oder 6, dadurch gekennzeichnet, daß die Pumpeneinrichtung (17) für das Permeat (15) auslaßseitig mit einem Flüssigkeitsbehälter (22) verbunden ist.

8. Vorrichtung nach einem oder mehreren der Ansprüche 5 bis 7, dadurch gekennzeichnet, daß das die Pumpeneinrichtung (16) verlassende Retentat (14) an die Umgebung (18) abgebbar ist.

9. Vorrichtung nach Anspruch 8, dadurch gekennzeichnet, daß die Pumpeneinrichtung (16) für das Retentat (14) mit dem Entlüftungsraum (23) des Flüssigkeitsbehälters (22) verbunden ist.

10. Vorrichtung nach einem oder mehreren der Ansprüche 5 bis 9, dadurch gekennzeichnet, daß der Saugdruck des zur Trenneinrichtung (13) geführten zu trennenden Gasgemisches (12) über ein Regelventil (21) einstellbar ist.

## Claims

1. Process for separating gas mixtures, in particular hydrocarbon gas mixtures, which arise above liquids, with the use of a separating device exhibiting a gas separation membrane on the retained portion side whereof there is generatable a mixture which is impoverished as to gas (the retained portion) and on the permeate side whereof there is generatable a mixture which is enriched as to gas (the permeate), characterised in that the volume per unit time of the gas mixture to be separated which arises when the liquid contacts the ambient gas during a transfer operation of the liquid and which is supplied to the separating device as a result of a partial vacuum on the retained portion side and the permeate side, is greater than the volume per unit time of the liquid which is transferred during the transfer operation, and the volume per unit time of the permeate generated is less than or equal to the volume per unit time of the liquid which is transferred during the transfer operation, wherein the volumes are by reference to standard temperature and pressure.

2. Process according to Claim 1, characterised in that the permeate is supplied again to a liquid store whence the liquid had been removed for the transfer operation.

3. Process according to one or both of Claims 1 or 2, characterised in that the retained portion is discharged to the ambient atmosphere.

4. Process according to one or more of Claims 1 to 3, characterised in that the suction pressure of the gas mixture to be separated is adjustable to a predeterminable value before entry to the separating device.

5. Process for separating gas mixtures, in particular hydrocarbon gas mixtures, which arise above liquids, with the use of a separating device exhibiting a gas separation membrane on the retained portion side whereof there is generatable a mixture which is impoverished as to gas (the retained portion) and on the permeate side whereof there is generatable a mixture which is enriched as to gas (the permeate), for carrying out the process according to one or more of Claims 1 to 4, characterised in that there are arranged on the retained portion side (14) and on the permeate side (15), respectively, of the separating device (13) a pumping device (16) and a pumping device (17) for generating a partial vacuum, which are adjustable such that the volume per unit time of the gas mixture to be separated (12) which arises when the liquid contacts the ambient gas (18) during a transfer operation of the liquid (11) and which is supplied to the separating device (13) is greater than the volume per unit time of the liquid (11) which is transferred during the transfer operation, and the volume per unit time of the permeate (15) generated is less than or equal to the volume per unit time of the liquid (11) which is transferred during the transfer operation, wherein the volumes are by reference to standard temperature and pressure.

6. Apparatus according to Claim 5, characterised in that a control valve (21) is arranged in a gas mixture (12) conveying line (19) from the transfer site (30) to the separating device (13).

7. Apparatus according to one or both of Claims 5 or 6, characterised in that the pumping device (17) for the permeate (15) is connected on the outlet side to a liquid container (22).

8. Apparatus according to one or more of Claims 5 to 7, characterised in that the retained portion (14) leaving the pumping device (16) is dischargeable to the ambient atmosphere (18).

9. Apparatus according to Claim 8, characterised in that the pumping device (16) for the retained portion (14) is connected to the ventilation space (23) of the liquid container (22).

10. Apparatus according to one or more of Claims 5 to 9, characterised in that the suction pressure of the gas mixture (12) to be separated which is supplied to the separating device (13) is adjustable by way of a control valve (21).

## Revendications

1. Procédé de séparation de mélanges de gaz qui se forment au-dessus des liquides, en particulier de mélanges de gaz d'hydrocarbures, en utilisant une installation de séparation de gaz présentant une mebrane de séparation de gaz, en pouvant produire du côté de rétentat de ladite membrane un mélange appauvri en gaz (rétentat) et du côté de perméat un mélange enrichi en gaz, caractérisé en ce que le volume du mélange de gaz à séparer, amené à l'installation de séparation par unité de temps au moyen d'un défaut de pression du côté de rétentat et du côté de perméat, lequel mélange se forme lors d'un transvasement du liquide par son contact avec le gaz environnant, est > au volume du liquide transvasé dans une unité de temps lors du transvasement, et le volume du perméat formé dans une unité de temps est ≤ au volume du liquide transvasé dans une unité de temps lors du transvasement, les quantités en volume étant ramenées à l'état normal.

2. Procédé selon la revendication 1, caractérisé en ce que le perméat est renvoyé à nouveau à une réserve de liquide, à laquelle le liquide a été soutiré pour l'opération de transvasement.

3. Procédé selon une ou les deux des revendications 1 ou 2, caractérisé en ce que le rétentat est dégagé dans l'environnement.

4. Procédé selon une ou plusieurs des revendications 1 à 3, caractérisé en ce que la pression d'aspiration du mélange à séparer peut être reglée à une valeur prédéterminée avant l'entrée dans l'installation de séparation.

5. Dispositif de séparation de mélanges de gaz qui se forment au-dessus des liquides, en particulier de mélanges de gaz d'hydrocarbures, en utilisant une installation de séparation de gaz présentant une membrane de séparation, en pouvant produire un mélange appauvri en gaz (rétentat) du côté de rétentat de ladite membrane et en mélange enrichi en gaz (perméat) du côté de perméat de ladite membrane, pour la mise en oeuvre du procédé selon une ou plusieurs des revendications 1 à 4, caractérisé en ce que dans l'installation de séparation (13), aussi bien du côté de rétentat (14) que du côté de perméat (15), une installation de pompage (16, 17) est disposée de chaque côté pour créer un défaut de pression que l'on peut régler de façon telle que le volume du mélange de gaz à séparer (12), amené à l'installation de séparation (13) par unité de temps, lequel mélange gazeux se forme lors du transvasement du liquide (11) par son contact avec le gaz environnant (18), soit > au volume du liquide (11) transvasée lors du transvasement par unité de temps et le volume du perméat (15) formé soit ≤ au volume du liquide (11) transvasé par unité de temps lors du transvasement, les quantités en volumes étant ramenées à l'état normal.

6. Dispositif selon la revendication 5, caractérisé en ce qu'une vanne de réglage (21) est disposée dans une conduite de transport (19) du mélange gazeux (12) du point de transvasement (20) vers l'installation de séparation (13).

7. Dispositif selon une ou les deux revendications 5 ou 6, caractérisé en ce que l'installation de pompage (17) pour le perméat (15) est relié du côté de vidange à un réservoir de liquide (22).

8. Dispositif selon une ou plusieurs des revendications 5 ou 7, caractérisé en ce que le rétentat (14) sortant de l'installation de pompage (16) peut être dégagé dans l'environnement (18).

9. Dispositif selon la revendication 8, caractérisé en ce que l'installation de pompage (16) pour le rétentat (14) est reliée à un espace d'aération (23) du réservoir de liquide (22).

10. Dispositif selon une ou plusieurs des revendications 5 à 9, caractérisé en ce que la pression d'aspiration du mélange gazeux à séparer (12) amené à l'installation de séparation est réglable à l'aide d'une vanne de réglage (21).
